Europäisches Patentamt

European Patent Office

Office européen des brevets

(19)

(11) Publication number : **0 514 219 A1**

(12) **EUROPEAN PATENT APPLICATION**

(21) Application number : 92304452.3

(22) Date of filing : 14.05.92

(51) Int. Cl.⁵ : **B60C 23/20**

(30) Priority : **15.05.91 GB 9110553**

(43) Date of publication of application :
**19.11.92 Bulletin 92/47**

(84) Designated Contracting States :
**DE FR GB**

(71) Applicant : **FORD MOTOR COMPANY LIMITED**
**Eagle Way**
**Brentwood Essex CM13 3BW (GB)**
(84) **GB**

(71) Applicant : **FORD-WERKE**
**AKTIENGESELLSCHAFT**
**Werk Köln-Niehl Henry-Ford-Strasse Postfach**
**60 40 02**
**W-5000 Köln 60 (DE)**
(84) **DE**

(71) Applicant : **FORD FRANCE S. A.**
**B.P. 307**
**F-92506 Rueil-Malmaison Cédex (FR)**
(84) **FR**

(72) Inventor : **Lindre, Jaan**
**47 Falbro Crescent**
**Hadleigh, Essex SS7 2SE (GB)**
Inventor : **Turner, John David**
**8 Eightacres**
**Romsey, Hampshire SO51 8BQ (GB)**
Inventor : **Hill, Martyn**
**Flat 6 Glen Eyre Close**
**Southampton Hampshire (GB)**

(74) Representative : **Messulam, Alec Moses et al**
**A. Messulam & Co. 24 Broadway**
**Leigh on Sea Essex SS9 1BN (GB)**

(54) **Tyre pressure transducer.**

(57)    A tyre pressure transducer comprises a wheel mounted piston and cylinder unit 10 having a working chamber communicating with the air within the tyre, a reservoir for applying a return force to the piston 18 in opposition to the force resulting from the pressure in the working chamber, and permanent magnets 26, 28, 30 mounted on the cylinder 10 and the piston 18, The transducer also comprises a sensor stationarily mounted to detect the passage of the permanent magnets as the wheel rotates relative to the sensor.

EP 0 514 219 A1

Jouve, 18, rue Saint-Denis, 75001 PARIS

## Field of the invention

The present invention relates to a tyre pressure transducer.

## Background of the invention

Various ways have been considered in the prior art for determining the pressure in a tyre so that the driver may be warned in time of a deflated or punctured tyre. An electrical pressure sensing circuit is mounted on the wheel and transmits a signal to stationary receiver.

Such electrical transducers require power to be fed to the circuits mounted on the wheel as they cannot have their own permanent supply. In practice, it is difficult when the wheel is rotating at speed to couple enough power into the wheel mounted circuit and to detect the signal that it transmits within the short time that it takes for the wheel mounted circuit to move past the stationary receiver.

## Object of the invention

The invention seeks to provide a transducer for sensing the pressure in a rotating wheel which does not have any parts mounted on the wheel that require electrical power for their operation.

## Summary of the invention

According to the present invention, there is provided a tyre pressure transducer comprising a wheel mounted piston and cylinder unit having a working chamber communicating with the air within the tyre, means for applying a return force to the piston in opposition to the force resulting from the pressure in the working chamber, and permanent magnets mounted on the cylinder and the piston, the transducer further comprising sensing means stationarily mounted to detect the passage of the permanent magnets as the wheel rotates relative thereto.

When the pressure in the tyre changes, the piston moves relative to the cylinder and the separation between the permanent magnets on the piston and on the cylinder varies. This separation may be sensed by the stationary sensing means and converted into a signal dependent upon the tyre pressure without the need for any active electrical components to be mounted on the wheel.

Because the air within a tyre has almost constant volume under all operating conditions, the pressure increases in direct proportion to the absolute temperature. For this reason, in order for the signal from the transducer to be meaningful, compensation should be made for the temperature of the air in the tyre. To provide an electrical temperature transducer for sensing this temperature to allow compensation to be made for it, could again raise the problems detailed above of supplying power to a moving circuit and extracting a signal from it.

In accordance with a preferred embodiment of the invention, therefore, the means for applying a return to the piston is operative to apply a counter-balancing force to the piston which increases with temperature.

To this end, a second, sealed, constant volume, working chamber is preferably provided to act on the opposite side of the piston from the side exposed to the tyre pressure, the second working chamber being at the same temperature as the air within the tyre.

The second chamber may be filled with air or a vapour. As any change in temperature will affect both chambers acting on the piston, it is possible to ensure that the separation of the magnets is correctly representative of the degree of inflation and substantially independent of temperature.

The second working chamber may be formed by a length of tube with rigid walls mounted within the tyre. Because of the large ratio of the surface area of such a tube to the volume of the gas in it, it is possible to ensure that the gas operates at the same temperature as the air in the tyre. The tube can also be wrapped around the wheel and thereby avoid creating a serious weight imbalance in the region of the transducer.

It is important that the various working chambers be properly sealed and to this end it is preferred that the piston be connected to the cylinder by means of a rolling seal. Experimental evidence suggests that bellows suffer excessively from hysteresis and that moving seals, such as O-rings, suffer from leakage, which is especially noticeable in view of the long periods of operation.

If the piston and cylinder unit is mounted inside the wheel, it is not easily possible to detect the passage of the permanent magnets and for this reason it preferred to mount the unit externally.

The sensing means will produce a signal with each passage of a magnet but the resulting signals require processing to provide an indication of the tyre pressure. The processing circuit cannot measure distance as such but only the time between the pulses and the wheel speed must therefore be taken into account. If only two magnets are provided on the piston cylinder unit, then a measure of the wheel speed can either be derived from an external source (for example from an ABS braking system if one is present) or from the time taken for each wheel revolution. Relying on this last method of speed measurement is however not preferred because the wheel can easily change its speed within a complete revolution and because it would take too long to obtain a meaningful indication when the tyre pressure changes. If an external source of wheel speed is not available, it is instead preferred to provide three magnets on the piston and cylinder unit, two being a fixed distance apart and the third varying relative to the first two in dependence upon tyre pressure. By providing two fixed magnets in the close vicinity of the piston, variations of wheel speed can effectively be taken into account.

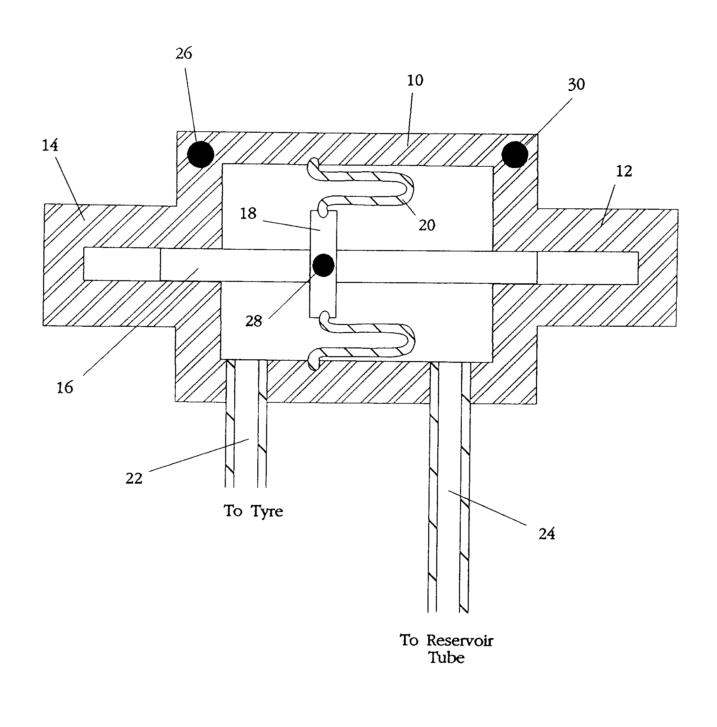

## Brief description of the drawing

The invention will now be described further, by way of example, with reference to the accompanying drawings, in which the single figure is a diagrammatic section through a piston and cylinder unit for mounting on a vehicle wheel to enable the tyre pressure to be determined by a stationary sensing unit.

## Detailed description of the preferred embodiment

In the drawing, a housing 10 defines a cylinder for a piston 18 mounted on a shaft 16 which is journalled for axial movement in two lateral extensions 12 and 14 of the housing 10. The piston 18 is sealed relative to the cylinder 10 by means of a rolling flexible seal 20 and divides the interior of the cylinder into two working chambers. The working chamber to the left of the piston 18 as viewed is connected through a pipe 22 to the interior of the tyre and is at the same pressure as the tyre. The working chamber to the right of the piston 18, on the other hand is connected by a pipe 24 to a constant volume reservoir which is contained within the tyre and is therefore maintained at the same temperature as the air in the tyre.

The reservoir may conveniently be in the form of a metal tube which is wrapped around the wheel and supported in clips fitted to the rim of the wheel. The reservoir is preferably filled with air but it is alternatively possible for the reservoir to contain a liquid.

The piston 18 carries a powerful permanent magnet 28, which is preferably one containing rare earth metals, and two further similar magnets 26 and 30 are carried by the housing 10 at the opposite ends of the piston 18. The housing is formed of a non-ferromagnetic material so that the position of the magnet 28 can be sensed externally.

In use, the housing 10 is mounted on the outside of the wheel near its rim and the tubes 22 and 24 pass through the wheel rim. The tube 22 merely allows the air in the tyre to act on the left side, as viewed, of the piston 18 and the tube 24 connects the chamber to the right of the piston 18 with a constant volume tubular reservoir wrapped around at least part of the rim circumference.

The sealed working chamber to the right of the piston acts as an air spring to provided a force which varies with the temperature in the tyre. Temperature affects the pressure on both sides of the piston 18 equally and movement of the latter is determined only by the mass of air in the tyre. If the tyre is over-inflated the piston moves to the right and if it is deflated, the piston moves to the left.

The chamber to the right of the piston 18 preferably has a separate valve by means of which it may be pressurised. This allows the piston cylinder unit to be calibrated for any reference tyre pressure. More particularly, in use, the tyre is first inflated to the desired pressure then the reference chamber is pressurised to the extent necessary to position the piston centrally within the cylinder, as illustrated. Thereafter, movement of the piston 18, which can be sensed from the relative positions of the magnets 26, 28 and 30, will indicate the amount of air remaining in the tyre.

To sense the positions of the magnets 26, 28 and 30, a Hall effect sensor is stationarily mounted, for example on the brake calliper, to produce a pulse with the passage of each of the magnets in turn. The three consecutive pulses define two time periods the ratio between which is indicative of the tyre pressure, compensated for the effects of temperature.

If only one magnet is provided on the housing, the two resulting pulses would define a time period which is related to the tyre pressure but which would also be wheel speed dependent. Such an arrangement may suffice in a vehicle fitted with an ABS braking system as the wheel speed is then known at all times, however, the provision of the third magnet removes the dependence upon wheel speed and the transducer may then be fitted to all vehicles without requiring any connection to the existing vehicle wiring.

It will be appreciated that a wide variety of digital and analogue circuits can be used to evaluate the ratio of the durations of two time periods and it is not therefore believed necessary to describe the signal processing in detail. Similarly, several known circuits can detect the passage of a magnet and the invention is not restricted to the use of a Hall effect sensor.

## Claims

1. A tyre pressure transducer characterised by a wheel mounted piston and cylinder unit (10) having a working chamber communicating with the air within the tyre, means (24) for applying a return force to the piston (18) in opposition to the force resulting from the pressure in the working chamber, permanent magnets (26, 28) mounted on the cylinder (10) and the piston (18), and sensing means stationarily mounted to detect the passage of the permanent magnets (26, 28) as the wheel rotates relative thereto.

2. A tyre pressure transducer as claimed in claim 1, wherein the means (24) for applying a return to the piston (18) is operative to apply a counter-balancing force to the piston which increases with temperature.

3. A tyre pressure transducer as claimed in claim 2, wherein a second, sealed, constant volume, working chamber is provided to act on the opposite side of the piston (18) from the side exposed to the tyre pressure, the second working chamber being at the same temperature as the air within the tyre.

4. A tyre pressure transducer as claimed in claim 3, wherein the second working chamber is filled with air at the same temperature as the air within the tyre.

5. A tyre pressure transducer as claimed in claim 4, wherein the second working chamber is formed by a length of tube with rigid walls mounted within the tyre.

6. A tyre pressure transducer as claimed in claim 5, wherein the tube is wrapped around the wheel rim.

7. A tyre pressure transducer as claimed in any preceding claim, wherein the piston is sealed relative to the cylinder by means of a flexible rolling seal (20),

8. A tyre pressure transducer as claimed in any preceding claims, wherein the piston and cylinder unit (10) is mounted outside the wheel.

9. A tyre pressure transducer as claimed in any preceding claim, wherein three magnets (26, 28 & 30) are provided on the piston and cylinder unit two (26, 30) being a fixed distance apart and the third (28) varying relative to the first two in dependence upon tyre pressure.

To Tyre

To Reservoir
Tube

**European Patent Office**

## EUROPEAN SEARCH REPORT

Application Number

EP 92 30 4452

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| P,X | DE-A-4 016 207 (SEIDER)<br>* column 1, line 65 - column 2, line 29; figures 11-14 *<br>* column 4, line 43 - column 5, line 19; figures 6-8,15 *<br>* column 6, line 18 - line 24; figures 1-4 *<br>--- | 1-9 | B60C23/20 |
| X | DE-A-3 208 869 (BMW)<br>* claims 1-8; figures * | 1,9 | |
| Y | | 7 | |
| A | | 2-6 | |
| | --- | | |
| Y | US-A-3 710 314 (BELL)<br>* column 4, line 16 - line 23; figure 1 *<br>--- | 7 | |
| A | WO-A-8 803 879 (BOSCH)<br>* page 10, line 1 - page 11, paragraph 2; figure 4 *<br>----- | 3,4 | |
| | | | **TECHNICAL FIELDS SEARCHED (Int. Cl.5 )**<br><br>B60C |

The present search report has been drawn up for all claims

| Place of search | Date of completion of the search | Examiner |
|---|---|---|
| THE HAGUE | 01 SEPTEMBER 1992 | HAGEMAN M. |

EPO FORM 1503 03.82 (P0401)